# EUROPÄISCHE PATENTSCHRIFT

(11) **EP 0 921 053 B1**
(45) Veröffentlichungstag und Bekanntmachung des Hinweises auf die Patenterteilung: **26.02.2003**
(21) Anmeldenummer: 98121114.7
(22) Anmeldetag: 09.11.1998
(51) Int. Cl.: B62D 29/00, B62D 21/09

(54) **Leichtmetallbauteil**
Light metal component
Pièce en alliage léger

(30) Priorität: 06.12.1997 DE 19754170
(43) Veröffentlichungstag der Anmeldung: 09.06.1999
(73) Patentinhaber: Volkswagen Aktiengesellschaft, 38436 Wolfsburg (DE)
(72) Erfinder: Arnheim, Hans-Rudolf, Dipl.-Ing., 38477 Jembke (DE); Hillmann, Jürgen, Dr., 38518 Gifhorn (DE); Jonscher, Axel, 38106 Braunschweig (DE)

(56) Entgegenhaltungen:
- DE-A- 19 518 946
- DE-A- 19 622 661
- US-A- 4 337 963
- W.BEITZ UND K.-H.GROTE: "DUBBEL Taschenbuch für den Maschinenbau, 19. Auflage" 1997 , SPRINGER VERLAG , BERLIN, HEIDELBERG (DE) XP002157923 * Seite S5, rechte Spalte - Seite S6, linke Spalte *

## Beschreibung

Insbesondere bei der Herstellung von Fahrzeugkarosserien finden verstärkt Werkstoffe und Werkstoffkombinationen Verwendung, die eine exakte Abstimmung der Werkstoffeigenschaften in einem Bauteil in Abhängigkeit von Einsatzbedingungen und Einbauverhältnissen erlauben. Bisher werden hierzu Bauteile aus Blechen oder dünnwandigen Profilen eingesetzt, mit denen aus einer Vielzahl von einzelnen Teilen durch vorwiegend thermische Fügeverfahren z.B. die Karosserie eines Fahrzeuges hergestellt wird.

Es kommen im Fahrzeugbau zunehmend Werkstoffe aus Leichtmetallen oder Leichtmetallegierungen zum Einsatz, aus denen die Karosserieaußenhaut oder auch tragende Bauteile von Kraftfahrzeugen bis hin zu vollständig aus Leichtmetall bestehenden Karosserien hergestellt werden. Derartige Leichtmetalle sind überwiegend Aluminium und in verstärktem Maße auch Magnesium, die beide hinsichtlich ihrer Verfügbarkeit, verarbeitungstechnisch und bezüglich der Werkstoffkennwerte besonders günstig sind.

Problematisch bei der Verwendung von derartigen Leichtmetallen im Fahrzeugbau ist vor allem, daß die Festigkeitseigenschaften von Leichtmetallen für manche Belastungen an Kraftfahrzeugteilen nicht ausreichend sind. Relativ unproblematisch und schon erprobt ist die Verwendung von Leichtmetallen zum Ersatz von großflächigen Stahlteilen der Karosserie - z.B. der Außenhaut - durch Aluminiumteile, da sie im Regelfall keinen besonders hohen Belastungen unterliegen. Insbesondere bei mechanisch belasteten Bauteilen treten jedoch Einzelbelastungen und Lastkollektive auf, die eine Herstellung derartiger Funktionsteile aus passend geformten Leichtmetallblechen nicht erlauben. Entweder würden die Bauteile aufgrund zu hoher Einzelbelastungen frühzeitig versagen oder es kommt viel früher als bei Stahlblechbauteilen zu einem Dauerversagen aufgrund von Ermüdungsbrüchen.

Eine Möglichkeit zur Erhöhung der Festigkeit von Leichtmetallbauteilen besteht darin, daß zur Herstellung der Leichtmetallbauteile statt relativ dünner Leichtmetallbleche aus Leichtmetallen oder Leichtmetallegierungen hergestellte Gußteile verwendet werden, die entsprechend den Möglichkeiten der Gießtechnik in Bereichen höherer Belastungen mehr Material vorsehen und damit belastungsgerechter konstruiert werden können.

Das gießtechnisch umsetzbare Vorsehen von Materialanhäufungen in Bereichen größerer Belastungen eines Bauteiles findet dadurch seine Grenzen, daß entweder die Materialdicken sehr groß gewählt werden müssen und dadurch eine Gewichtseinsparung durch die Verwendung leichterer Werkstoffe zunichte gemacht wird. Eine andere Begrenzung liegt darin, daß insbesondere Verstärkungsrippen od. dgl. gießtechnisch zu Ausformproblemen führen, die die Herstellung eines Gußteiles bzw. einer Gußform stark verteuern.

Aus der DE 196 22 661 A ist des Weiteren ein Leichtmetallbauteil bekannt, welches sich aus einer Mehrzahl von langgestreckten Strangpreßteilen zusammensetzt, die ihrerseits mittels sogenannter Knotenelemente sowie Seitenplatten durch Schweißen oder mechanische Verbindungsmittel miteinander verbunden werden. Diese Lösung wird insbesondere aufgrund des hohen Fertigungs- und Montageaufwandes als äußerst zeit- und kostenintensiv eingeschätzt.

Aufgabe der vorliegenden Erfindung ist es daher, eine vereinfachte belastungsgerechte Gestaltung von Leichtmetallbauteilen zu ermöglichen, bei der die Vorteile der Leichtmetallbauweise voll ausgeschöpft werden können.

Die Lösung dieser Aufgabe ergibt sich aus den kennzeichnenden Merkmalen des Anspruches 1 in Zusammenwirken mit den Merkmalen des Oberbegriffes. Die Unteransprüche beschreiben bevorzugte Weiterbildungen.

Die erfindungsgemäße Lösung geht aus von einem Leichtmetallbauteil, das mindestens ein Gußteil aus einem Leichtmetall und/oder einer Leichtmetallegierung enthält, wobei das Gußteil selbst wiederum hohlprofilartige Abschnitte in hochbelasteten bereichen aufweist, in denen das Gußteil in der Regel aus Wandungen geringer Wandungsdicke besteht. Erfindungsgemäß ist das Gußteil als umlaufender Rahmen gestaltet und weist mindestens ein Verstärkungselement auf, das im Bereich der hohlprofilartigen Abschnitte des Gußteiles kammerartig geschlossene Formen bildet. Derartige kammerartig geschlossene Formen werden z. B. gezielt dort vorgesehen, wo etwa aufgrund von einwirkenden Belastungen eine Verstärkung des Materials des Gußteiles vorteilhaft ist und gießtechnisch nicht oder schwierig vorzusehen und/oder aus Gewichtsgründen unerwünscht ist. Die kammerartige Form mit der geschlossenen Berandung sorgt dabei dafür, daß aufgrund des geschlossenen Querschnittes in der kammerartigen Form eine Erhöhung der Festigkeitseigenschaften des beispielsweise als offenes Hohlprofil gestalteten Gußteiles hervorgerufen wird. Somit lassen sich beispielsweise leichtgewichtige, offene Profilformen in dem Gußteil realisieren und es kann gezielt an z.B. hochbelasteten Stellen des Gußteiles durch das Vorsehen der kammerartig geschlossenen Formen mit Hilfe eines oder mehrerer Verstärkungselemente(s) (s) gezielt die Belastbarkeit des Gesamtbauteiles erhöht werden.

In einer bevorzugten Weiterbildung bildet das Verstärkungselement gemeinsam mit zugeordneten Bereichen des Gußteiles zumindest im Querschnitt geschlossene kammerartige Formen. Hierdurch wird durch das zusätzliche Vorsehen eines Verstärkungselementes gemeinsam mit den dem Verstärkungselement zugeordneten Bereichen des hohlprofilartigen Gußteiles eine Versteifung und Verstärkung des Gußteiles erreicht, ohne daß die gesamte Umhüllung der kammerartigen Form allein durch das Verstärkungselement gebildet werden muß. Eine derartige Kombination zugeordneter Bereiche des Gußteiles mit dem Verstärkungselement bewirkt eine nur geringe Gewichtserhöhung durch das Verstärkungselement, wobei sich trotzdem geschlossene kammerartige Formen ergeben.

In einer besonders bevorzugten Weise überdeckt das Verstärkungselement die hohlprofilartigen Bereiche des Gußteiles derart und ist so an diesen Bereichen festgelegt, daß die kammerartigen Formen im Querschnitt geschlossen und nur einseitig geöffnet sind. Hierbei wird das Verstärkungselement nicht in Form eines in sich geschlossenen Bauteiles mit dem Gußteil in Verbindung gebracht, sondern es kann ein gar nicht oder nur wenig gekrümmtes Verstärkungselement so an den zugeordneten Bereichen des Gußteiles angeordnet und mit diesem verbunden werden, daß sich ein kammerartiger Abschluß der hohlprofilartigen Bereiche des Gußteiles durch das Verstärkungselement ergibt. Hierbei bilden das Verstärkungselement und die hohlprofilartigen Bereiche des Gußteiles nicht eine vollständig in sich geschlossene kammerartige Form, sondern die kammerartige Form ist einseitig geöffnet. Hierdurch wird die Herstellung des Verstärkungselementes in Bezug auf die Anpassung seiner Berandungen bzw. Flächen an die hohlprofilartigen Bereiche des Gußteiles vereinfacht, da die Verbindungsbereiche zwischen hohlprofilartigen Bereichen des Gußteiles und Verstärkungselement mit einfachen Geometrien gebildet werden können.

In einer anderen bevorzugten Weiterbildung überdeckt das Verstärkungselement die hohlprofilartigen Bereiche des Gußteiles derart und ist so an diesen Bereichen festgelegt, daß die kammerartigen Formen vollständig geschlossen sind. In einer derartigen Weiterbildung bilden das Verstärkungselement und die hohlprofilartigen Bereiche des Gußteiles eine allseitig geschlossene Berandung der kammerartigen Form, wodurch sich eine Versteifungswirkung in alle Raumrichtungen ergibt und hinsichtlich aller Belastungsrichtungen ein geschlossenes und damit belastungssteifes Bauteil gebildet ist.

In besonders vorteilhafter Weise können das Verstärkungselement und die hohlprofilartigen Bereiche des Gußteiles mittels thermischer Fügeverfahren aneinander festgelegt sein. Hierdurch ergibt sich eine entlang einer ausreichenden Verbindungslinie gebildete Übertragung von Belastungen von dem Gußteil auf das Verstärkungselement und umgekehrt, so daß das Verstärkungselement in seiner Gesamtheit zur Verstärkung des Gußteiles beiträgt.

In einer anderen besonders bevorzugten Ausbildung ist in die hohlprofilartigen Bereiche des Gußteiles mindestens ein im Querschnitt in sich geschlossenes, kammerartige Formen bildendes Verstärkungselement eingelegt. Dieses Verstärkungselement bildet schon für sich allein eine kammerartige Form, die im Querschnitt in sich geschlossen ist und die Vorteile eines geschlossenen Profiles bietet. Dieses Verstärkungselement ist vorteilhaft hinsichtlich seiner Außenform an die hohlprofilartigen Bereiche des Gußteiles angepaßt und kann daher in einer vorteilhaften Weise möglichst vollflächig in diese hohlprofilartigen Bereiche eingelegt werden. Wird dieses Verstärkungselement dann mit den hohlprofilartigen Bereichen des Gußteiles verbunden, so bewirkt es durch die gezielte Einbringung zusätzlichen Materials und die vorteilhafte Wirkung der geschlossenen Profilform eine wesentliche Verstärkung des Gußteiles in dem Bereich, in dem es in die hohlprofilartigen Bereiche eingebracht ist.

Besonders vorteilhaft ist es, wenn das die zumindest im Querschnitt kammerartig geschlossenen Formen bildende Verstärkungselement im Querschnitt geschlossen und nur einseitig geöffnet ist. Hierdurch wird die Herstellung des Verstärkungselementes beispielsweise durch Tiefzieh-Operationen od. dgl. ermöglicht, wodurch insbesondere eine einfache und kostengünstige Vorfertigung der Verstärkungselemente ermöglicht wird. Die so vorgefertigten Verstärkungselemente werden in die hohlprofilartigen Bereiche des Gußteiles belastungsgerecht eingelegt und befestigt.

In einer anderen vorteilhaften Weiterbildung wird in die hohlprofilartigen Bereiche des Gußteiles mindestens ein im Querschnitt vollständig gegenüber der Umgebung abgeschlossenes, einen kammerartigen Hohlraum bildendes Verstärkungselement eingelegt. Ein derartiges Verstärkungselement bildet aufgrund des völligen Abschlusses gegenüber seiner Umgebung ein in alle Belastungsrichtungen steifes, da geschlossenes Element.

Ein derartiges vollständig gegenüber der Umgebung abgeschlossenes Verstärkungselement kann in besonders vorteilhafter Weise durch Innenhochdruckumformung hergestellt sein, bei der in grundsätzlich bekannter Weise ein vorgefertigtes Hohlelement durch Innendruck aufgeweitet und gegebenenfalls hinsichtlich seiner Form mittels eines Werkzeuges verändert werden kann. In einer Weiterbildung kann ein derartiges vollständig gegenüber der Umgebung abgeschlossenes Verstärkungselement zusätzlich nach seiner Formgebung unter Innendruck gesetzt werden, wodurch die Berandungen des Verstärkungselementes durch den Innendruck zusätzlich stabilisiert und verstärkt werden. Hierdurch kann besonders bei mittels Innenhochdruck umgeformten Verstärkungselementen ohne große zusätzliche Maßnahmen dafür gesorgt werden, daß das Verstärkungselement zusätzlich zu seiner Materialfestigkeit besondere Festigkeitseigenschaften erlangt.

Hinsichtlich der Verbindung des Gußteiles mit dem Verstärkungselement kann in einer bevorzugten Weiterbildung das Gußteil mit dem Verstärkungselement zumindestens abschnittsweise durch thermische Fügeverfahren verbunden sein. Hierdurch wird insbesondere auch bei Leichtmetallwerkstoffen eine besonders feste Verbindung zwischen Gußteil und Verstärkungselement erzielt, die eine besonders gute Übertragung der Belastungen zwischen Verstärkungselement und Gußteil ermöglicht.

Insbesondere zusätzlich zu anderen Verbindungsverfahren, aber auch bei Verbindung von nicht miteinander thermisch fügbaren Verbindungspartnern kann das Gußteil mit dem Verstärkungselement zumindestens abschnittsweise durch Kleben verbunden sein. Diese Verbindung mittels Kleben ermöglicht eine vollflächige Verbindung zwischen Gußteil und Verstärkungselement, die trotz der relativ geringen Flächenfestigkeit einer Klebeverbindung aufgrund der hohen Flächenanteile der Verbindung eine sehr gute Festlegung des Verstärkungselementes am Gußteil hervorruft.

In einer anderen Weiterbildung kann das Gußteil mit dem Verstärkungselement zumindestens abschnittsweise durch Stanznieten verbunden sein, wobei sich derartige Verbindungen bevorzugt dann anbieten, wenn aus ästhetischen Gründen die Sichtbarkeit der Stanznietverbindung nicht störend ist. Hierdurch werden aufwendigere Vorfertigungen für die Verbindung überflüssig, wodurch die Fertigungskosten für diese Verbindung besonders gering sind.

Sehr vorteilhaft ist auch eine Weiterbildung, bei der das Verstärkungselement und das Gußteil einstückig ausgebildet sind, beispielsweise in einem Stück gegossen sind. Hierdurch ist eine besonders einfache und gießtechnisch beherrschbare Gestaltung der kammerartig geschlossenen Form herstellbar, und der Kraftfluß zwischen Gußteil und Verstärkungselement bei Belastung wird optimiert.

Weitere Unteransprüche geben bevorzugte Weiterbildungen hinsichtlich der Materialkombinationen von Gußteil und Verstärkungselement an, wobei besonders bevorzugt Leichtmetalle, beispielsweise Aluminium und Magnesium sowie deren Legierungen auch in Kombination miteinander angewendet werden können.

Weiterhin wird ein besonders bevorzugter Einsatzbereich erfindungsgemäßer Leichtmetallbauteile im Fahrzeugbau angegeben, wobei insbesondere zur Herstellung der Karosserie eines Kraftfahrzeuges Verstärkungselemente im Bereich der Eckknotenpunkte der Karosserie, die zu den höchstbelasteten Bauteilen der Karosserie gehören, vorgesehen werden können.

Eine besonders vorteilhafte Ausbildung des erfindungsgemäßen Leichtmetallbauteiles, insbesondere für den Einsatz an Karosserieteilen von Kraftfahrzeugen, zeigt die Zeichnung.

Es zeigt:
- Fig. 1a-1c: ein erfindungsgemäßes Leichtmetallbauteil als Ausschnitt aus einer Heckklappe an einem Kraftfahrzeug in einer Draufsicht und in Schnitten,
- Fig. 2: eine andere Ausführungsform des erfindungsgemäßen Leichtmetallbauteiles mit einem geschweißten Leichtmetallrahmen,
- Fig. 3: eine andere Ausführungsform des erfindungsgemäßen Leichtmetallbauteils mit einem einstückig mit dem Verstärkungselement gegossenen Leichtmetallrahmen,
- Fig. 4: ein in die hohlprofilartigen Bereiche eines Gußteiles eingelegtes Verstärkungselement.

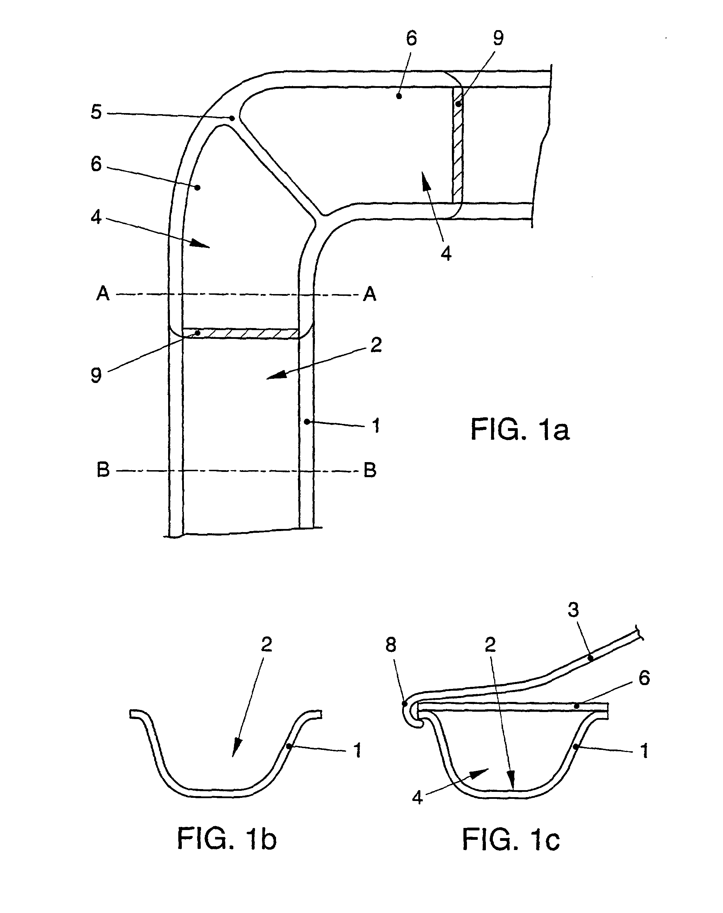

In den Figuren 1 bis 4 ist am Beispiel einer Heckklappe eines Kraftfahrzeuges prinzipienhaft dargestellt, wie das erfindungsgemäße Leichtmetallbauteil gestaltet und eingesetzt werden kann. Dieser nur prinzipienhaft dargestellte Aufbau eines Leichtmetallbauteiles läßt sich auf eine Vielzahl von Anwendungen und Varianten übertragen.

In den Figuren 1a bis 1c ist in einem Ausbruch ein als Gußteil ausgestalteter Rahmen 1 einer Heckklappe eines Kraftfahrzeuges dargestellt, wobei der Rahmen 1 in diesem Bereich aus einem Hohlprofil 2 gebildet ist, das beispielsweise den Außenmaßen der Hecköffnung und der Heckfensterscheibe des Kraftfahrzeuges angepaßt ist und üblicherweise als umlaufender Rahmen 1 gestaltet wird. Bei dem in den Figuren 1a bis 1c dargestellten Rahmen 1 bildet der hohlprofilartige Bereich 2 eine im wesentlichen rinnenartige Form, die im Bereich der Eckknotenpunkte durch Schottbleche 5 abgeteilt ist und somit aus einzelnen Rinnenabschnitten besteht.

Der Querschnitt des Rahmens 1 läßt sich aus den Figuren 1b bzw. 1c erkennen, wobei die Figur 1b einen Schnitt entlang der Linie B-B darstellt und die Figur 1c einem Schnitt entlang der Linie A-A entspricht.

Insbesondere im Bereich des Schottbleches 5 unterliegt der Rahmen 1 im eingebauten Zustand und beim Betrieb des Kraftfahrzeuges großen Belastungen, die beispielsweise aus der Öffnungsbewegung der Heckklappe, Verwindungen der Fahrzeugkarosserie sowie dynamischen Belastungen aufgrund der Fahrsituation herrühren. Daher ist der Eckbereich der Heckklappe im Bereich des Schottbleches 5 ein mechanisch hochbelasteter Bereich, der einer Verstärkung bedarf.

In erfindungsgemäßer Weise ist in einer ersten Ausführungsform ein Verstärkungselement 6 vorgesehen, das das rinnenartige Hohlprofil 2 des Rahmens 1 angrenzend an das Schottblech 5 übergreift und an den Schenkeln der Rinne des Rahmens 1 festgelegt ist. Dieses Verstärkungselement 6, das in der Figur 1c noch einmal in einer Schnittdarstellung deutlich zu erkennen ist, überdeckt damit den Rinnenbereich des Hohlprofiles 2 wie ein Deckel und bildet damit mit dem Rinnenbereich des Hohlprofiles 2 eine geschlossene Form 4, die die Vorteile eines geschlossenen Profiles hinsichtlich der Belastung durch Biegung und Torsion aufweist. Hierdurch werden an dem Hohlprofil 2 angreifende Belastungen, die beispielsweise auch die Schenkel des Hohlprofiles 2 verbiegen bzw. tordieren, wesentlich besser über das Verstärkungselement 6 abgestützt und somit ist eine Verformung des hohlprofilartigen Bereiches 2 im an das Schottblech 5 angrenzenden Eckbereich abgefangen. Ebenfalls kann ein derartiges Verstärkungselement 6 auf der anderen Seite des Schottbleches 5 in entsprechender Form vorgesehen werden (vgl. Figur 1a).

In der Figur 1c ist weiterhin dargestellt, daß an den Schenkeln des hohlprofilartigen Bereiches 2 des Rahmens 1 ein Blech 3, beispielsweise ein Verkleidungsblech der Außenkarosserie od. dgl., mittels einer Bördelnaht 8 festgelegt werden kann, um beispielsweise den Rahmen 1 optisch zu verkleiden.

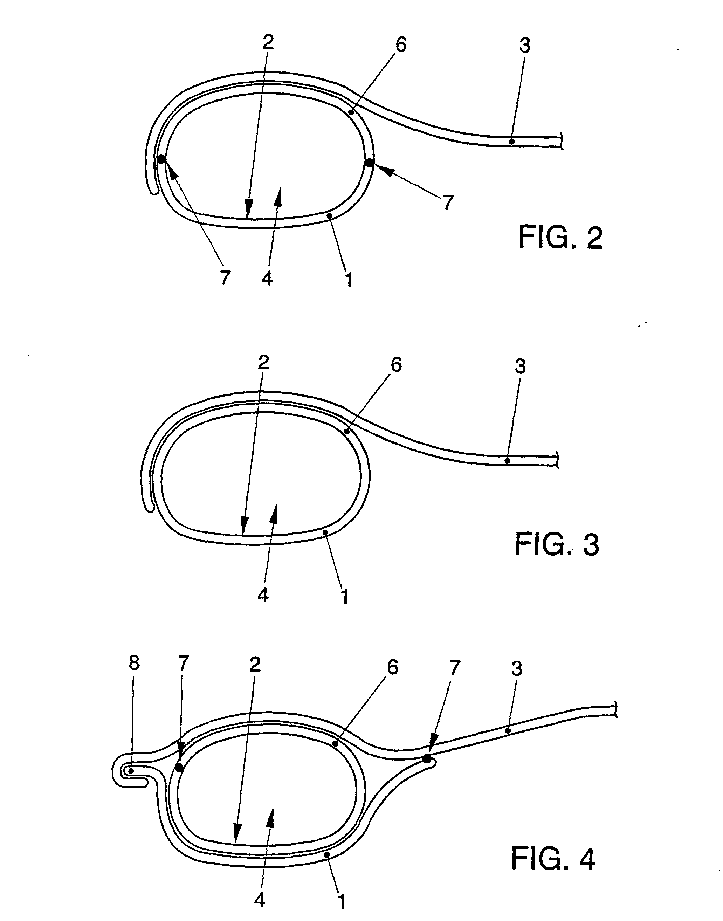

In der Figur 2 ist eine andere Ausführungsform des erfindungsgemäßen Leichtmetallbauteiles in einem Schnitt entsprechend der Linie A-A gemäß Figur 1a dargestellt, bei dem ein Rahmen 1 als eine hohlprofilartige Bereiche 2 aufweisende Rinne ausgebildet ist, die von einem ebenfalls einen rinnenartigen Bereich aufweisenden Verstärkungselement 6 übergriffen wird. Hierbei sind die beiden Schenkelbereiche der rinnenartigen Ausbildungen des Rahmens 1 bzw. des Verstärkungselementes 6 zueinander gewandt und derart aufeinandergelegt, daß durch zwei Schweißnähte 7 diese beiden Teile 1 bzw. 6 aneinander festgelegt werden können. Es ergibt sich somit ein im Querschnitt ungefähr ovaler, rohrartiger Rahmen 1, der einen geschlossenen Querschnitt bildet, der beispielsweise Belastungen, die über das Blech 3 auf den Rahmen 1 übertragen werden, sicher abstützt. Das Blech 3 ist hierbei in nicht weiter dargestellter Weise an dem aus dem Rahmen 1 bzw. dem Verstärkungselement 6 gebildeten Leichtmetallbauteil festgelegt, z. B. geklebt.

In einer möglichen anderen, in Figur 3 im Querschnitt entsprechend der Linie A-A gemäß Figur 1a dargestellten Gestaltung können die rinnenartige Ausbildung des Rahmens 1 und das Verstärkungselement 6 auch gleich beim Gießen des Gußteiles einstückig miteinander hergestellt werden, wodurch die Formgebung besonders einfach möglich ist. Hierdurch entfällt der Fertigungsaufwand zur Herstellung der Verbindungen zwischen den Schenkelbereichen und dem Verstärkungselement. Der Querschnitt eines derartigen Leichtmetallbauteils entsprechend der Linie A-A gemäß Figur 1a gleicht weitgehend der Figur 2, wobei allerdings die Schweißnähte 7 aufgrund der einstückigen Ausbildung entfallen.

In der Figur 4 ist in einer Abwandlung dargestellt, wie ein in sich geschlossenes Verstärkungselement 6, das hier beispielsweise aus einem auf sich selbst zurückgewalzten rohrförmigen Blechbauteil mit einer Schweißnaht 7 ausgebildet ist, in einen hohlprofilartigen Bereich 2 des Rahmens 1 eingelegt sein kann. Die einander zugeordneten Bereiche des Hohlprofiles 2 sowie des Verstärkungselementes 6 weisen ineinanderpassende Formen auf, so daß sich zwischen dem Verstärkungselement 6 und dem Rahmen 1 eine weitgehend vollflächige Anlage ergibt. Wird nun das derart eingelegte Verstärkungselement 6 in das Hohlprofil 2 des Rahmens 1 eingelegt und dort beispielsweise mittels Kleben, Verschweißen od. dgl. befestigt, so tritt eine deutliche Verstärkung der mechanischen Belastbarkeit des Leichtmetallbauteiles ein. Eine weitere Versteifung kann sich beispielsweise dadurch ergeben, daß das Blech 3 zur Verkleidung des Rahmens 1 den Verbund aus Verstärkungselement 6 und Rahmen 1 übergreift und mit diesem beispielsweise mittels einer Schweißnaht 7 bzw. einer Bördelnaht 8 verbunden ist.

Ein derartiges geschlossenes Verstärkungselement 6 kann besonders vorteilhaft auch mittels Innenhochdruckumformung hergestellt werden, wobei mit dem an sich bekannten Verfahren das Verstärkungselement 6 auch innerhalb des hohlprofilartigen Bereiches 2 des Rahmens 1 selbst verformt und somit genau an den hohlprofilartigen Bereich angelegt werden kann.

Es sei noch darauf hingewiesen, daß in allen dargestellten Ausführungsformen gemäß der Figuren 1 bis 4 die hohlkammerartige Form 4 noch quer zum Profilquerschnitt beispielsweise durch eine Berandung mittels eines Deckbleches 9 vollständig abgeschlossen werden kann, wodurch sich insbesondere für alle Belastungsrichtungen, also auch entlang der Mittellinie des rinnenartigen Bereiches des Rahmens 1 eine Versteifung des Rahmens 1 ergibt.

### BEZUGSZEICHENLISTE

- 1: Rahmen
- 2: Hohlprofil
- 3: Blech
- 4: Form
- 5: Schottblech
- 6: Verstärkungselement
- 7: Schweißnaht
- 8: Bördelnaht
- 9: Deckblech

## Patentansprüche

1. Leichtmetallbauteil, enthaltend mindestens ein Gußteil (1) aus einem Leichtmetall und/oder einer Leichtmetallegierung, welches hohlprofilartige Abschnitte (2) in hochbelasteten bereichen aufweist,
**dadurch gekennzeichnet, dass**
das Gußteil (1) als umlaufender Rahmen gestaltet ist und mindestens ein Verstärkungselement (6) aufweist, das im Bereich der hohlprofilartigen Abschnitte (2) des Gußteiles (1) kammerartig geschlossene Formen (4) bildet.

2. Leichtmetallbauteil nach Anspruch 1, **dadurch gekennzeichnet, daß** das Verstärkungselement (6) gemeinsam mit zugeordneten Bereichen des Gußteiles (1) geschlossene kammerartige Formen (4) bildet.

3. Leichtmetallbauteil nach Anspruch 2, **dadurch gekennzeichnet, daß** das Verstärkungselement (6) die hohlprofilartigen Bereiche (2) des Gußteiles (1) so überdeckt und so an diesen Bereichen (2) festgelegt ist, daß die kammerartigen Formen (4) im Querschnitt geschlossen und nur einseitig geöffnet sind.

4. Leichtmetallbauteil nach Anspruch 2, **dadurch gekennzeichnet, daß** das Verstärkungselement (6) die hohlprofilartigen Bereiche (2) des Gußteiles (1) so überdeckt und so an diesen Bereichen (2) festgelegt ist, daß die kammerartigen Formen (4) vollständig geschlossen sind.

5. Leichtmetallbauteil nach einem der Ansprüche 2 bis 4, **dadurch gekennzeichnet, daß** das Verstärkungselement (6) und die hohlprofilartigen Bereiche (2) des Gußteiles (1) mittels thermischer Fügeverfahren aneinander festgelegt sind.

6. Leichtmetallbauteil nach einem der vorstehenden Ansprüche, **dadurch gekennzeichnet, daß** in die hohlprofilartigen Bereiche (2) des Gußteiles (1) mindestens ein im Querschnitt in sich geschlossenes, kammerartige Formen (4) bildendes Verstärkungselement (6) eingelegt und mit diesen hohlprofilartigen Bereichen (2) verbunden ist.

7. Leichtmetallbauteil nach Anspruch 6, **dadurch gekennzeichnet, daß** das die kammerartigen Formen (4) bildende Verstärkungselement (6) im Querschnitt geschlossen und nur einseitig geöffnet ist.

8. Leichtmetallbauteil nach Anspruch 6 oder 7, **dadurch gekennzeichnet, daß** in die hohlprofilartigen Bereiche (2) des Gußteiles (1) mindestens ein im Querschnitt vollständig gegenüber der Umgebung abgeschlossenes, einen kammerartigen Hohlraum (4) bildendes Verstärkungselement (6) eingelegt ist.

9. Leichtmetallbauteil nach Anspruch 8, **dadurch gekennzeichnet, daß** das vollständig gegenüber der Umgebung abgeschlossene Verstärkungselement (6) durch Innenhochdruckumformung hergestellt ist.

10. Leichtmetallbauteil nach einem der Ansprüche 8 oder 9, **dadurch gekennzeichnet, daß** das vollständig gegenüber der Umgebung abgeschlossene Verstärkungselement (6) unter Innendruck steht.

11. Leichtmetallbauteil nach einem der vorstehenden Ansprüche, **dadurch gekennzeichnet, daß** das Gußteil (1) mit dem Verstärkungselement (6) zumindest abschnittsweise durch thermische Fügeverfahren verbunden ist.

12. Leichtmetallbauteil nach einem der vorstehenden Ansprüche, **dadurch gekennzeichnet, daß** das Gußteil (1) mit dem Verstärkungselement (6) zumindest abschnittsweise durch Kleben verbunden ist.

13. Leichtmetallbauteil nach einem der vorstehenden Ansprüche, **dadurch gekennzeichnet, daß** das Gußteil (1) mit dem Verstärkungselement (6) zumindest abschnittsweise durch Stanznieten verbunden ist.

14. Leichtmetallbauteil nach Anspruch 1, **dadurch gekennzeichnet, daß** das Verstärkungselement (6) und das Gußteil (1) einstückig ausgebildet sind.

15. Leichtmetallbauteil nach einem der vorstehenden Ansprüche, **dadurch gekennzeichnet, daß** das mindestens eine Verstärkungselement (6) und/oder das Gußteil aus einem Leichtmetall und/oder einer Leichtmetallegierung bestehen.

16. Leichtmetallbauteil nach Anspruch 15, **dadurch gekennzeichnet, daß** das mindestens eine Verstärkungselement (6) und/oder das Gußteil (1) aus Aluminium und/oder Magnesium und/oder ihren jeweiligen Legierungen bestehen.

17. Leichtmetallbauteil nach einem der vorstehenden Ansprüche, **dadurch gekennzeichnet, daß** das Gußteil (1) in dem Leichtmetallbauteil im wesentlichen versteifende und/oder tragende Funktion hat.

18. Leichtmetallbauteil nach einem der vorstehenden Ansprüche, **dadurch gekennzeichnet, daß** das Leichtmetallbauteil ein Karosserieteil ist, vorzugsweise ein Teil der Karosserieaußenhaut eines Kraftfahrzeuges.

19. Leichtmetallbauteil nach Anspruch 18, **dadurch gekennzeichnet, daß** die Verstärkungselemente (6) im Bereich von Eckknotenpunkten der Karosserie angeordnet sind.

20. Leichtmetallbauteil nach einem der Ansprüche 18 oder 19, **dadurch gekennzeichnet, daß** das Leichtmetallbauteil eine Heckklappe eines Kraftfahrzeuges ist.

## Claims

1. Light metal component, including at least one casting (1) made from a light metal and/or a light metal alloy, which has hollow-section-like portions (2) in highly loaded regions, **characterized in that** the casting (1) is configured as a surrounding frame and has at least one reinforcing element (6), which in the region of the hollow-section-like portions (2) of the casting (1) forms chamber-like closed forms (4).

2. Light metal component according to Claim 1, **characterized in that** the reinforcing element (6), together with associated regions of the casting (1), forms closed chamber-like forms (4).

3. Light metal component according to Claim 2, **characterized in that** the reinforcing element (6) covers the hollow-section-like regions (2) of the casting (1) and is fixed to these regions (2) in such a way that the chamber-like forms (4) are closed in cross section and are only open on one side.

4. Light metal component according to Claim 2, **characterized in that** the reinforcing element (6) covers the hollow-section-like regions (2) of the casting (1) and is fixed to these regions (2) in such a way that the chamber-like forms (4) are completely closed.

5. Light metal component according to one of Claims 2 to 4, **characterized in that** the reinforcing element (6) and the hollow-section-like regions (2) of the casting (1) are fixed to one another by means of thermal joining methods.

6. Light metal component according to one of the preceding claims, **characterized in that** at least one reinforcing element (6), which forms chamber-like forms (4) which are continuously closed in cross section, is inserted into the hollow-section-like regions (2) of the casting (1) and is joined to these hollow-section-like regions (2).

7. Light metal component according to Claim 6, **characterized in that** the reinforcing element (6) which forms the chamber-like forms (4) is closed in cross section and is only open on one side.

8. Light metal component according to Claim 6 or 7, **characterized in that** at least one reinforcing element (6), which is completely sealed off from the environment in cross section and forms a chamber-like cavity (4), is inserted into the hollow-section-like regions (2) of the casting (1).

9. Light metal component according to Claim 8, **characterized in that** the reinforcing element (6) which is completely sealed off from the environment is produced by internal high-pressure forming.

10. Light metal component according to one of Claims 8 or 9, **characterized in that** the reinforcing element (6) which is completely sealed off from the environment is under an internal pressure.

11. Light metal component according to one of the preceding claims, **characterized in that** the casting (1) is joined to the reinforcing element (6) at least in sections by thermal joining methods.

12. Light metal component according to one of the preceding claims, **characterized in that** the casting (1) is joined to the reinforcing element (6) at least in sections by adhesive bonding.

13. Light metal component according to one of the preceding claims, **characterized in that** the casting (1) is joined to the reinforcing element (6) at least in sections by punch-riveting.

14. Light metal component according to Claim 1, **characterized in that** the reinforcing element (6) and the casting (1) are formed integrally.

15. Light metal component according to one of the preceding claims, **characterized in that** the at least one reinforcing element (6) and/or the casting consist of a light metal and/or a light metal alloy.

16. Light metal component according to Claim 15, **characterized in that** the at least one reinforcing element (6) and/or the casting (1) consist of aluminium and/or magnesium and/or their respective alloys.

17. Light metal component according to one of the preceding claims, **characterized in that** the casting (1) in the light metal component substantially has a reinforcing and/or supporting function.

18. Light metal component according to one of the preceding claims, **characterized in that** the light metal component is a vehicle body part, preferably a part of the outer skin of the body of a motor vehicle.

19. Light metal component according to Claim 18, **characterized in that** the reinforcing elements (6) are arranged in the region of corner nodes of the vehicle body.

20. Light metal component according to one of Claims 18 or 19, **characterized in that** the light metal component is a tailgate of a motor vehicle.

## Revendications

1. Pièce en métal léger, comportant au moins une pièce coulée (1) en un métal léger et/ou un alliage de métal léger, qui présente des parties en forme de profilé creux (2) dans des régions fortement chargées, **caractérisée en ce que** la pièce coulée (1) a la forme d'un cadre enveloppant et présente au moins un élément de renforcement (6), qui forme des volumes fermés (4) en forme de chambres dans la région des parties en forme de profilé creux (2) de la pièce coulée (1).

2. Pièce en métal léger suivant la revendication 1, **caractérisée en ce que** l'élément de renforcement (6) forme des volumes fermés (4) en forme de chambres avec des régions associées de la pièce coulée (1).

3. Pièce en métal léger suivant la revendication 2, **caractérisée en ce que** l'élément de renforcement (6) recouvre les régions en forme de profilé creux (2) de la pièce coulée (1) et est fixé sur ces régions (2) de telle façon que les volumes en forme de chambres (4) soient fermés en section transversale et ne soient ouverts que d'un côté.

4. Pièce en métal léger suivant la revendication 2, **caractérisée en ce que** l'élément de renforcement (6) recouvre les régions en forme de profilé creux (2) de la pièce coulée (1) et est fixé à ces régions (2) de telle façon que les volumes en forme de chambres (4) soient entièrement fermés.

5. Pièce en métal léger suivant l'une quelconque des revendications 2 à 4, **caractérisée en ce que** l'élément de renforcement (6) et les régions en forme de profilé creux (2) de la pièce coulée (1) sont fixés l'un à l'autre par des procédés d'assemblage thermiques.

6. Pièce en métal léger suivant l'une quelconque des revendications précédentes, **caractérisée en ce qu'**au moins un élément de renforcement (6), fermé par nature en section transversale et formant des volumes en forme de chambres (4), est placé dans les régions en forme de profilé creux (2) de la pièce coulée (1) et est assemblé à ces régions en forme de profilé creux (2).

7. Pièce en métal léger suivant la revendication 6, **caractérisée en ce que** l'élément de renforcement (6) formant les volumes en forme de chambres (4) est fermé en section transversale et n'est ouvert que d'un côté.

8. Pièce en métal léger suivant la revendication 6 ou 7, **caractérisée en ce qu'**au moins un élément de renforcement (6), entièrement fermé par rapport à l'environnement et formant un volume creux en forme de chambre (4), est déposé dans les régions en forme de profilé creux (2) de la pièce coulée (1).

9. Pièce en métal léger suivant la revendication 8, **caractérisée en ce que** l'élément de renforcement (6) entièrement fermé par rapport à l'environnement est fabriqué par déformation sous haute pression interne.

10. Pièce en métal léger suivant l'une des revendications 8 ou 9, **caractérisée en ce que** l'élément de renforcement (6) entièrement fermé par rapport à l'environnement se trouve sous une pression interne.

11. Pièce en métal léger suivant l'une quelconque des revendications précédentes, **caractérisée en ce que** la pièce coulée (1) est assemblée à l'élément de renforcement (6) au moins en partie par des procédés d'assemblage thermiques.

12. Pièce en métal léger suivant l'une quelconque des revendications précédentes, **caractérisée en ce que** la pièce coulée (1) est assemblée à l'élément de renforcement (6) au moins en partie par collage.

13. Pièce en métal léger suivant l'une quelconque des revendications précédentes, **caractérisée en ce que** la pièce coulée (1) est assemblée à l'élément de renforcement (6) au moins en partie par rivetage.

14. Pièce en métal léger suivant la revendication 1, **caractérisée en ce que** l'élément de renforcement (6) et la pièce coulée (1) sont réalisés en une pièce.

15. Pièce en métal léger suivant l'une quelconque des revendications précédentes, **caractérisée en ce que** le au moins un élément de renforcement et/ou la pièce coulée sont constitués d'un métal léger et/ou d'un alliage de métal léger.

16. Pièce en métal léger suivant la revendication 15, **caractérisée en ce que** le au moins un élément de renforcement (6) et/ou la pièce coulée (1) sont constitués d'aluminium et/ou de magnésium et/ou de leurs alliages respectifs.

17. Pièce en métal léger suivant l'une quelconque des revendications précédentes, **caractérisée en ce que** la pièce coulée (1) a dans la pièce en métal léger une fonction essentiellement de raidissement et/ou de support.

18. Pièce en métal léger suivant l'une quelconque des revendications précédentes, **caractérisée en ce que** la pièce en métal léger est une pièce de carrosserie, de préférence une partie de la carrosserie extérieure d'un véhicule.

19. Pièce en métal léger suivant la revendication 18, **caractérisée en ce que** les éléments de renforcement (6) sont disposés dans la région des noeuds d'assemblage d'angle de la carrosserie.

20. Pièce en métal léger suivant l'une des revendications 18 ou 19, **caractérisée en ce que** la pièce en métal léger est un hayon d'un véhicule à moteur.
